# EUROPÄISCHE PATENTSCHRIFT

(11) **EP 1 007 746 B1**
(45) Veröffentlichungstag und Bekanntmachung des Hinweises auf die Patenterteilung: **10.10.2001**
(21) Anmeldenummer: 98941306.7
(22) Anmeldetag: 08.07.1998
(51) Int. Cl.: C22B 1/20, F27B 21/06

(54) **VERFAHREN ZUM BETRIEB EINER SINTERANLAGE**
METHOD FOR OPERATING A SINTERING PLANT
PROCEDE PERMETTANT DE FAIRE FONCTIONNER UNE INSTALLATION DE FRITTAGE

(30) Priorität: 24.07.1997 EP 97112726
(43) Veröffentlichungstag der Anmeldung: 14.06.2000
(73) Patentinhaber: SIEMENS AKTIENGESELLSCHAFT, 80333 München (DE)
(72) Erfinder: HUMS, Erich, D-91093 Hessdorf (DE); SPIELMANN, Horst, D-91083 Baiersdorf (DE)
(86) Internationale Anmeldenummer: EP9804256
(87) Internationale Veröffentlichungsnummer: WO9905329

(56) Entgegenhaltungen:
- EP-A- 0 039 305
- EP-A- 0 645 172
- GB-A- 2 155 457
- JP-A- 54 122 602
- PATENT ABSTRACTS OF JAPAN vol. 96, no. 1, 31. Januar 1996 & JP 07 243634 A (MITSUI TOATSU CHEM INC)

## Beschreibung

Die Erfindung betrifft ein Verfahren zum Betrieb einer Sinteranlage zur Verringerung der Emission von Dioxinen.

Eine Sinteranlage ist eine großtechnische Anlage der Hüttentechnik und dient dazu, feinkörnige oder feinstaubige metallische, metalloxidische oder metallsulfidische Feststoffgemischen stückig zu machen, damit sie zur Verhüttung verwendet werden können. Erst die stückig gemachten Feststoffgemische können in einem Hochofen eingesetzt werden.

In der Sinteranlage wird das zu sinternde Material oder Sintergut durch Sintern, d.h. durch Erhitzen bis nahe an den Schmelzpunkt unter oberflächlicher Erweichung und teilweiser Schmelz- und Schlackenbildung, verfestigt. Hierzu wird das Sintergut, welches bei der Erzverhüttung beispielsweise ein Feinerz, ein Kiesabbrand, ein Gichtstaub oder auch ein Feinstaub aus einer metallverarbeitenden Industrie sein kann, eventuell mit Rückgut, schlackenbildenden Zusätzen oder einem festen Brennstoffgemisch auf einen sogenannten Wanderrost aufgebracht. Der Wanderrost ist dabei in der Regel als eine endlose Kette aus einzelnen Rostwagen ausgebildet, wobei die Kette über entsprechende Umlenkrollen in Arbeitsrichtung der Sinteranlage läuft.

An einer Einlaßstelle werden die vorbeifahrenden Rostwagen mit dem Sintergut gefüllt. Hierbei wird zunächst zum Schutz gegen Durchfallen des Sinterguts der als Gitterrost ausgebildete Boden des Rostwagens mit bereits abgeröstetem Rückgut der Sinteranlage bedeckt und anschließend das eventuell mit Brennstoff vermischte Sintergut eingefüllt. Die befüllten Rostwagen fahren sodann an einem Zündofen entlang, wobei das Sintergut oder der darin enthaltene Brennstoff mittels einer Zündflamme an der Oberfläche entzündet wird: Der Verbrennungs- und Sintervorgang in den einzelnen Rostwagen schreitet dann durch Eigenverbrennung mittels durch ein Saug- oder Druckgebläse hindurchgeleiteter Verbrennungsluft von selbst in das Innere des Rostwagens fort, während die Rostwagen zu einer Auslaßstelle transportiert werden.

Ein Großteil des in der Sinteranlage verarbeiteten Sintergutes stellt feinkörniger oder feinstaubiger Abrieb aus Feil-, Schleif-, oder Bohrprozessen der metallverarbeitenden Industrie dar. Dieser Abrieb ist jedoch nachteiligerweise haufig mit öligen Bohrhilfen, Schmier- oder Kühlmitteln versetzt, welche in nicht unerheblichem Maße halogenierte Kohlenwasserstoffe und Aromaten aufweisen. Bei den thermischen Prozessen während des Sintervorgangs entstehen daher in der Sinteranlage auch Dioxine, welche über das Abgas in die Umwelt gelangen können. Dabei soll der Begriff "Dioxine" in folgenden als Sammelbegriff für die Gruppe der zyklischen halogenierten aromatischen Polyether verwendet werden. Hierzu gehören insbesondere die zyklischen Ether (Furane) sowie die zyklischen Diether (die eigentlichen Dioxine). Als besonders toxisch wirkende Vertreter beider Gruppen seien hier die polychlorierten Dibenzodioxine (PCDD) und die polychlorierten Dibenzofurane (PCDF) genannt.

Aus der GB 2 155 457 A ist ein Verfahren zum Betrieb einer Sinteranlage bekannt, wobei zur Verringerung von Kohlenwasserstoffen dem Sintergut vor dem Sintern ein Oxidationskatalysator beigemengt wird. Als Katalysatorkomponenten sind anorganische oder organische Verbindungen der Übergangsmetalle wie Ni, Cu, Fe, V oder Cr genannt.

In der EP 0 645 172 A1 wird ein Dioxin-Katalysator auf Edelmetall-Basis zur Behandlung von Abgasen vorgeschlagen.

Verglichen mit sonstigen großtechnischen Anlagen der Metallgewinnung und Metallverarbeitung stellen Sinteranlagen mithin die größte Quelle für die Emission von Dioxinen dar. So werden in dem Abgas einer Sinteranlage Dioxinwerte bis zu 60 ng TE/m³ gefunden (TE = Toxical Equivalent). Um die von einer Sinteranlage in die Umgebung abgegebene Menge an Dioxinen unterhalb des gesetzlich vorgeschriebenen Grenzwertes (zur Zeit 0,1 ng TE/m³) zu halten, ist es aus W. Weiss: "Minderung der PCDD/PCDF-Emissionen an einer Eisenerz-Sinteranlage", VDI Berichte Nr. 1298 (1996), Seite 249 ff, bekannt, dem Abgas einer Sinteranlage zur Dioxin-Adsorption als Zuschlagstoff eine Mischung aus Kalziumhydroxid Ca(OH)₂ und Kohle (in Form von Herdofenkoks oder Aktivkohle) zuzugeben und den teilweise mit Dioxinen beladenen Zuschlagstoff mittels eines Gewebefilters dem Abgas wieder zu entnehmen und dem Abgas erneut zuzuführen. Des weiteren ist es aus G. Mayer-Schwinning et al.: "Minderungstechniken zur Abgasreinigung für PCDD/F", VDI Berichte Nr. 1298 (1996) Seite 191 ff, bekannt, Zeolite als Dioxin-Adsorber im Abgas einer Sinteranlage einzusetzen.

Die beladenen Dioxin-Adsorber müssen jedoch nachteiligerweise auf einer Deponie endgelagert werden, was erhebliche Kosten verursacht und Gefahr für die Umwelt birgt.

Aufgabe der Erfindung ist es daher, die Dioxin-Emission beim Betrieb einer Sinteranlage zur verringern, ohne die Umwelt zusätzlich zu gefährden.

Die Aufgabe wird erfindungsgemäß gelöst, indem beim Betrieb einer erstgenannten Sinteranlage zur Dioxin-Verringerung im Abgas ein für den Abbau von Dioxinen katalytisch aktives Material dem Sintergut vor dem Sintern in feinkörniger Form oder staubförmig beigemengt und zusammen mit dem Sintergut gesintert wird.

Die Erfindung geht dabei von der Überlegung aus, daß dem Sintergut beigemengtes Fremdmaterial wie Verunreinigungen, beigemischte Verschlackungshilfen (Silikate) oder Brennhilfsmittel (z.B. Koks) während des Sintervorgangs in der Sinteranlage in das entstehende Agglomerat des Sinterguts mit eingebunden werden. Das eingebundene Fremdmaterial gelangt dann zusammen mit dem Sintergut zur Verhüttung in den Hochofenprozeß und nimmt dort keinen negativen Einfluß auf die Verschlackung. Das Fremdmaterial wird im Gegenteil sogar in die im Hochofen entstehende Schlacke unlöslich eingebunden.

Obwohl sich in der Regel aufgrund der niedrigen Abgastemperaturen von weniger als 200 °C eine katalytische Verringerung der Dioxine im Abgas einer Sinteranlage nicht durchführen läßt, kann aufgrund der Schlackeneinbindung von Fremdmaterial durch Zugabe von katalytisch aktivem Material zum Sintergut eine katalytische Beseitigung von Dioxinen erreicht werden. Zum einen zeigt derartig eingebrachtes Material keinen negativen Einfluß auf den Sintervorgang und auf den nachfolgenden Verhüttungsprozeß des gesinterten Sinterguts. Zum anderen kann durch eingebrachtes katalytisch aktives Material bereits am Ort des Entstehens der Dioxine, d.h. während des Verbrennungsprozesses im Sintergut, erreicht werden, daß die entstandenen Dioxine effektiv verringert werden und daß gleichzeitig eine Neubildung von Dioxinen verhindert wird.

Da bei einer Sinteranlage die Verbrennungsluft durch das Sintergut gesaugt oder geblasen wird, muß zwangsläufig das bei der Verbrennung entstehende Verbrennungsgas oder Abgas an den dem Sintergut beigemengten katalytisch aktiven Partikeln entlangströmen. Auf diese Weise kann durch ein dem Sintergut beigemengtes feinstaubiges oder feinkörniges katalytisch aktives Material eine effektive Verringerung der Dioxine im durchströmenden Abgas erzielt werden. Als für den Abbau von Dioxinen katalytisch wirksames Material kann Natrium, Kalium, Magnesium, Kalzium, Barium, Zink, Nickel, Blei, Titan, Kupfer, Eisen, Aluminium, Platin, Vanadium, Wolfram, Molybdän, Rhenium oder Cer einzeln oder in Kombination in feinstaubiger Form dem Sintergut beigemengt werden. Ebenfalls eignen sich Oxide, Salze oder Silikate der vorgenannten Elemente einzeln oder in Mischung hiervon für den katalytischen Abbau von Dioxinen unter den im Sintergut während des Sintervorgangs herrschenden Bedingungen und Temperaturen zwischen 150 und 1200 °C.

Als besonders effektiv wirkendes katalytisch aktives Material kann zum Abbau von Dioxinen auch ein Material der Zusammensetzung Titandioxid, Wolframtrioxid und/oder Vanadinpentoxid beigemengt werden. Ein derartiges Material ist als hochwirksamer Dioxin-Katalysator zur Abgasreinigung in Abgasen von Verbrennungsanlagen bekannt. Zusätzlich kann ein derartiges Material auch noch Beimengungen an Molybdänoxid enthalten.

Da das beigemengte katalytisch aktive Material während des Sintervorgangs in das Agglomerat des Sinterguts integriert und in dem anschließenden Verhüttungsprozeß im Hochofen in die entstehenden Schlacke unlöslich eingebunden wird, kann zur Dioxin-Entfernung dem Sintergut auch Flugasche aus Müll- und Abfallverbrennungsanlage beigemengt werden. Diese Flugasche ist in großen Mengen in dem Abgas derartiger Verbrennungsanlagen enthalten und wird mit Hilfe von Elektrofiltern aus dem Abgas entfernt. Eine derartige Flugasche ist als katalytisch aktives Material zur Verringerung von Dioxinen geeignet, da die Flugasche als Beimengungen die genannten katalytisch aktiven Elemente oder Verbindungen umfaßt. Auf diese Weise kann zudem die Flugasche, welche bislang kostenintensiv auf Deponien endgelagert werden mußte, gefahrlos entsorgt werden. Eventuell enthaltene Schwermetallkomponenten werden nämlich in die im Hochofenprozeß gewonnene Schlacke wasserunlöslich eingebunden. Eine derartige Schlacke ist zudem in Granulatform ein begehrtes Auffüllmaterial in der Bauindustrie.

Vorteilhafterweise können auch gebrauchte Dioxin-Katalysatoren als katalytisch aktives Material in feingemahlener Form dem Sintergut beigemengt werden. Als gebrauchte Dioxin-Katalysatoren kommen dabei solche Dioxin-Katalysatoren in Frage, welche zur Abgasreinigung von Verbrennungsanlagen oder Verbrennungsmaschinen eingesetzt wurden und infolge zunehmender Anlagerungen oder infolge des Verbrauchs an katalytisch aktivem Material für den dortigen Einsatz unbrauchbar geworden sind. Werden derartige Dioxin-Katalysatoren fein gemahlen dem Sintergut zugesetzt, so wird zum einen ihre noch vorhandene Restaktivität effektiv ausgenutzt und zum anderen werden die Katalysatorbestandteile zusammen mit eventuell dem Katalysator anhaftenden weiteren Materialien zunächst in das Agglomerat des Sinterguts und dann im Hochofenprozeß in die entstehende Schlacke unlöslich eingebunden. Teilweise werden eventuell schädliche, dem gebrauchten Dioxin-Katalysator anhaftende Materialien durch die hohen Temperaturen während des Sintervorgangs thermisch zersetzt. Die Entsorgung gebrauchter Dioxin-Katalysatoren durch ihre Verwendung als katalytisch aktives Material im Sintergut stellt daher einen sicheren und günstigen Entsorgungspfad dar.

Ebenso kann natürlich fein gemahlener Rückstand oder Produktabfall aus dem Herstellungsprozeß von Dioxin-Katalysatoren als katalytisch aktives Material dem Sintergut beigemengt werden. Auf diese Weise kann selbst bislang als wertlos erachtetes Rückstandsmaterial noch effektiv unter Ausnutzung seiner katalytischen Aktivität verwendet werden.

Um den Verschlackungsprozeß durch das in das Agglomerat des Sinterguts integrierte katalytisch aktive Fremdmaterial nicht negativ zu beeinflussen, ist es vorteilhaft, wenn das Gewichtsverhältnis zwischen katalytisch aktivem Material und Sintergut zwischen 1:30 und 1:1, vorzugsweise zwischen 1:20 und 1:5, beträgt. Innerhalb des angegebenen Gewichtsverhältnisses wird weder der Temperaturverlauf in einem Hochofen gestört noch das Fließ- oder Erstarrungsverhalten der entstehenden Schlacke beeinflußt.

Bei sehr feinkörnigem oder feinstaubigem Sintergut ist es vorteilhaft, daß das katalytisch aktive Material innig mit dem Sintergut vermischt wird. Dadurch ist eine sichere Kontaktierung des entstehenden Verbrennungsabgases mit dem beigemischten katalytisch aktiven Material gewährleistet. Ebenso ist es aber auch möglich, insbesondere bei verhältnismäßig grobem Sintergut, das katalytisch aktive Material abwechselnd dem Sintergut schichtformig in den Rostwagen einzubringen.

Eine entsprechende Sinteranlage enthält einen Sintergutbehälter, eine Zuführung für Sintergut von dem Sintergutbehalter zu einer Einlaßstelle, eine Transportvorrichtung zur Beforderung des Sinterguts von der Einlaßstelle entlang einer Sinterstrecke zu einer Auslaßstelle, an welcher das gesinterte Sintergut entnehmbar ist, und einen an der Einlaßstelle angeordneten Zündofen zur Entzündung des Sintergutes. Weiter sind ein Vorratsbehälter für zum Abbau von Dioxinen katalytisch aktivem Material in feinkörniger oder feinstaubiger Form und eine Zuführleitung für das katalytisch aktive Material vom Vorratsbehälter zur Einlaßstelle vorgesehen, und die Zuführleitung umfaßt eine Vorrichtung zur dosierten Beigabe des katalytisch aktiven Materials.

Das katalytisch aktive Material wird dabei in dem Vorratsbehälter gelagert und bei Bedarf über die Zuführleitung an der Einlaßstelle der Sinteranlage dem Sintergut in vorgegebener Menge beigemischt oder beigegeben.

Dabei kann das katalytisch aktive Material mit dem Sintergut gemischt werden, bevor mit diesem die Rostwagen befüllt werden, falls die Zuführleitung des katalytisch aktiven Materials vor der Einlaßstelle in die Zuführung des Sinterguts mündet. Die Mischung von Sintergut und katalytisch aktivem Material kann dabei in der Zuführung durch Verwirbelung erfolgen.

Bei entsprechender Ausführung ist jedoch ebensogut eine abwechselnde Zugabe von Sintergut und katalytisch aktivem Material möglich, so daß ein Schichtenaufbau in den einzelnen Rostwagen erfolgt.

Genauso gut ist es aber auch möglich, die Zuführleitung für das katalytisch aktive Material in einer separaten Einbringöffnung neben der Einlaßstelle für Sintergut anzuordnen.

Das feinkörnige oder staubförmige katalytisch aktive Material kann mit Hilfe eines Gebläses dosiert werden.

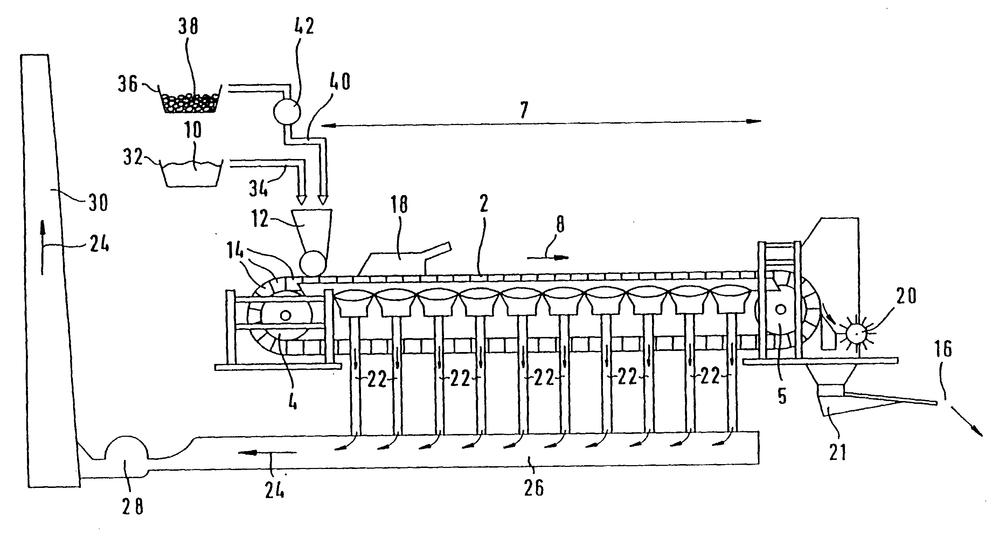

Die Erfindung wird anhand eines Ausführungsbeispiels gemäß der Figur, welche eine Sinteranlage zeigt, näher erläutert.

Die Figur zeigt hierzu eine typische Sinteranlage der Hüttentechnik, wie sie zum Stückigmachen von metallischen Feinstäuben oder feinen Metallerzen eingesetzt wird. Die Sinteranlage umfaßt hierbei einen Wanderrost oder ein Sinterband 2, welcher bzw. welches über zwei Umlenkrollen 4, 5 geführt ist. Das endlose Sinterband 2 transportiert dabei entlang einer Sinterstrecke 7 in Pfeilrichtung 8 das zu sinternde Material oder Sintergut 10. Das Sintergut 10 wird hierzu an einer Einlaßstelle 12 in die jeweils darunter vorbeifahrenden Rostwagen 14 des Sinterbandes 2 gefüllt, und am Ende des Prozesses an der Auslaßstelle 16 der Sinteranlage entnommen. Jeder einzelne Rostwagen 14 weist dabei zur Luftdurchlässigkeit einen als Gitterrost ausgebildeten Boden auf.

Durch eine Zündflamme an einem Zündofen 18 wird das eventuell mit Brennstoff versetzte Sintergut 10 in den vorbeifahrenden Rostwagen 14 an der Oberfläche entzündet. Durch eingeleitete Luft schreitet der Verbrennungs- und Sintervorgang durch Eigenverbrennung von selbst entlang der Sinterstrecke 7 in das Innere des Sintergutes 10 fort. Das gesinterte Material wird am Ende der Sinterstrecke 7 über einen Stachelbrecher 20 geleitet, dabei in handhabbare Stücke zerbrochen, und schließlich über die Auslaßstelle 16 der Sinteranlage entnommen. Der mit Hilfe eines Siebs 21 aufgefangene feine Staub kann der Sinteranlage über die Einlaßstelle 12 wieder zurückgeführt werden.

Zur Zuführung von Verbrennungsluft in die entlang der Sinterstrecke 7 laufenden Rostwagen 14 ist entlang der Sinterstrecke 7 oder entlang des Sinterbandes 2 eine Reihe von Abzugsleitungen 22 vorgesehen. Über diese Abzugsleitungen 22 strömt das Abgas 24 in eine gemeinsame Abgasleitung 26. Zur Erzeugung des nötigen Unterdruckes in den Abzugsleitungen 22 ist an der Abgasleitung 26 ein Sauggebläse 28 angeordnet. Der Ausgang dieses Sauggebläses 28 mündet in einen Kamin 30, wodurch das Abgas 24 in die Umgebung gelangt.

Das in einem Sintergutbehälter 32 gelagerte Sintergut 10 gelangt über eine Zuführung 34 in die trichterförmig ausgebildete Einlaßstelle 12 und über diese in die darunter vorbeifahrenden einzelnen Rostwagen 14. Daneben ist der Sinteranlage ein Vorratsbehälter 36 zugeordnet, in welchem feinkörniges, zum Abbau von Dioxinen katalytisch aktives Material 38 gelagert ist. Das katalytisch aktive Material ist hierbei feingemahlener, gebrauchter Dioxin-Katalysator auf der Basis von Titandioxid und Wolframtrioxid mit Beimengungen an Vanadinpentoxid und Molybdäntrioxid. Die verwendeten Dioxin-Katalysatoren sind dabei verbrauchte Dioxin-Katalysatoren, welche zur Abgasreinigung in dem Abgaskanal einer Verbrennungsanlage, wie z.B. einem Fossilkraftwerk, einem Müllheizkraftwerk oder einer Abfallverbrennungsanlage eingesetzt werden. Selbstverständlich können auch Dioxin-Katalysatoren aus gänzlich anderen Einsatzgebieten als katalytisch aktives Material in fein gemahlener Form dem Sintergut beigemengt werden.

Selbst gebrauchte DeNOx-Katalysatoren zur Entstickung von Abgasen einer Verbrennungsanlage eignen sich aufgrund ihrer gegenüber Dioxin-Katalysatoren ähnlichen Zusammensetzung als ein derartiges katalytisch aktives Material.

Das katalytisch aktive Material 38 wird über eine Zuführleitung 40 zu der Einlaßstelle 12 geführt und gelangt über diese zusammen mit dem Sintergut 10 in die darunter vorbeifahrenden Rostwagen 14. Die Dosierung des zugeführten katalytisch aktiven Materials 38 geschieht im vorliegendem Fall mit Hilfe eines Gebläses 42, welches das feinkörnige katalytisch aktive Material 38 durch die Zuführleitung 40 hindurch befördert. Sowohl die Zuführleitung 40 als auch die Zuführung 34 münden unmittelbar benachbart in die trichterförmig ausgebildete Einlaßstelle 12. Eine Mischung des katalytisch aktiven Materials 38 mit dem Sintergut 10 geschieht über die Einlaßstelle 12.

## Patentansprüche

1. Verfahren zum Betrieb einer Sinteranlage, wobei ein katalytisch aktives Material dem Sintergut (10) vor dem Sintern beigemengt wird,
**dadurch gekennzeichnet, daß** zur Dioxin-Verringerung im Abgas (24) als katalytisch aktives Material ein zum Abbau von Dioxinen katalytisch aktives Material (38) in feinkörniger Form oder staubförmig beigemengt und zusammen mit dem Sintergut (10) gesintert wird.

2. Verfahren nach Anspruch 1,
**dadurch gekennzeichnet, daß** als katalytisch aktives Material (38) Na, K, Mg, Ca, Ba, Zn, Ni, Pb, Ti, Cu, Fe, A1, Pi, V, W, Mo, Rh oder Cr oder ein Oxid oder ein Salz oder ein Silikat dieser Elemente einzeln oder eine Mischung hiervon beigemengt wird.

3. Verfahren nach Anspruch 1,
**dadurch gekennzeichnet, daß** als katalytisch aktives Material (38) Titandioxid, Wolframtrioxid und/oder Vanadinpentoxid beigemengt wird.

4. Verfahren nach Anspruch 1,
**dadurch gekennzeichnet, daß** als katalytisch aktives Material (38) Flugasche aus Müll- und Abfallverbrennungsanlagen beigemengt wird.

5. Verfahren nach Anspruch 1,
**dadurch gekennzeichnet, daß** als katalytisch aktives Material (38) feingemahlener gebrauchter Dioxin-Katalysator beigemengt wird.

6. Verfahren nach Anspruch 1,
**dadurch gekennzeichnet, daß** als katalytisch aktives Material (38) feingemahlener Rückstand oder Produktabfall aus dem Herstellungsprozeß von Dioxin-Katalysatoren beigemengt wird.

7. Verfahren nach einem der Ansprüche 1 bis 6,
**dadurch gekennzeichnet, daß** das Gewichtsverhältnis zwischen katalytisch aktivem Material (38) und Sintergut (10) zwischen 1:30 und 1:1, vorzugsweise zwischen 1:20 und 1:5 beträgt.

8. Verfahren nach einem der Ansprüche 1 bis 7,
**dadurch gekennzeichnet, daß** das katalytisch aktive Material (38) mit dem Sintergut (10) innig vermischt wird.

9. Verfahren nach einem der Ansprüche 1 bis 7,
**dadurch gekennzeichnet, daß** das katalytisch aktive Material (38) dem Sintergut (10) in Form mindestens einer Schicht beigemengt wird.

## Claims

1. Method for operating a sintering plant, in which a catalytically active material is admixed with the material for sintering (10) prior to sintering, **characterized in that**, in order to reduce the dioxin content in the off-gas (24), a material (38) which has a catalytic activity for the degradation of dioxins is admixed in the form of fine grains or dust as the catalytically active material and is sintered together with the material for sintering (10).

2. Method according to Claim 1, **characterized in that** Na, K, Mg, Ca, Ba, Zn, Ni, Pb, Ti, Cu, Fe, Al, Pt, V, W, Mo, Rh or Cr or an oxide or a salt or a silicate of these elements, individually or in a mixture of these, is admixed as the catalytically active material (38).

3. Method according to Claim 1, **characterized in that** titanium dioxide, tungsten trioxide and/or vanadium pentoxide is admixed as the catalytically active material (38).

4. Method according to Claim 1, **characterized in that** fly ash from refuse and waste incineration plants is admixed as the catalytically active material (38).

5. Method according to Claim 1, **characterized in that** finely-ground, consumed dioxin catalyst is admixed as the catalytically active material (38).

6. Method according to Claim 1, **characterized in that** finely-ground residue or product waste from the production process for dioxin catalysts is admixed as the catalytically active material (38).

7. Method according to one of Claims 1 to 6), **characterized in that** the weight ratio between catalytically active material (38) and material for sintering (10) is between 1:30 and 1:1, preferably between 1:20 and 1:5.

8. Method according to one of Claims 1 to 7, **characterized in that** the catalytically active material (38) is intimately mixed with the material for sintering (10).

9. Method according to one of Claims 1 to 7, **characterized in that** the catalytically active material (38) is admixed with the material for sintering (10) in the form of at least one layer.

## Revendications

1. Procédé pour faire fonctionner une installation d'agglomération, une matière active catalytiquement étant ajoutée au produit (10) à agglomérer avant l'agglomération,
**caractérisé en ce que**, pour diminuer la dioxine dans l'effluent (24) gazeux, on ajoute, en tant que matière active catalytiquement sous forme de grains fins ou sous forme de poussières, une matière (38) active catalytiquement pour la décomposition des dioxines, et on l'agglomère en même temps que le produit (10) à agglomérer.

2. Procédé suivant la revendication 1, **caractérisé en ce que** l'on ajoute en tant que matière (38) active catalytiquement Na, K, Mg, Ca, Ba, Zn, Ni, Pb, Ti, Cu, Fe, Al, Pt, V, W, Mo, Rh ou Cr ou un oxyde ou un sel ou un silicate de ces éléments seuls ou un mélange de ceux-ci.

3. Procédé suivant la revendication 1, **caractérisé en ce qu'**il consiste à ajouter comme matière (38) active catalytiquement du dioxyde de titane, du trioxyde de tungstène et/ou du pentoxyde de vanadium.

4. Procédé suivant la revendication 1, **caractérisé en ce qu'**il consiste à ajouter comme matière (38) active catalytiquement de la cendre volante provenant d'installations d'incinération d'ordures et de déchets.

5. Procédé suivant la revendication 1, **caractérisé en ce qu'**il consiste à ajouter comme matière (38) active catalytiquement un catalyseur de dioxine usée finement broyée.

6. Procédé suivant la revendication 1, **caractérisé en ce qu'**il consiste à ajouter comme matière (38) active catalytiquement un résidu finement broyé ou un déchet de produit provenant de l'opération de préparation de catalyseurs de dioxine.

7. Procédé suivant l'une des revendications 1 à 6, **caractérisé en ce que** le rapport en poids entre la matière (38) active catalytiquement et le produit (10) à agglomérer est compris entre 1:30 et 2:1 et de préférence entre 1:20 et 1:5.

8. Procédé suivant l'une des revendications 1 à 7, **caractérisé en ce que** l'on mélange la matière (38) active catalytiquement intimement au produit (10) à agglomérer.

9. Procédé suivant l'une des revendications 1 à 7, **caractérisé en ce que** l'on mélange la matière (38) active catalytiquement sous la forme d'au moins une couche au produit (10) à agglomérer.
